## Europäisches Patentamt
## European Patent Office
## Office européen des brevets

(11) Veröffentlichungsnummer: **0 231 223**
**B1**

(12) # EUROPÄISCHE PATENTSCHRIFT

(45) Veröffentlichungstag der Patentschrift:
10.05.89

(51) Int. Cl.⁴: **F 02 B 37/00,** F 02 N 17/00

(21) Anmeldenummer: 86904100.4

(22) Anmeldetag: 16.07.86

(86) Internationale Anmeldenummer:
PCT/DE 86/00291

(87) Internationale Veröffentlichungsnummer:
WO 87/00576 (29.01.87 Gazette 87/03)

(54) DIESELMOTOR.

(30) Priorität: 25.07.85 DE 3526665

(43) Veröffentlichungstag der Anmeldung:
12.08.87 Patentblatt 87/33

(45) Bekanntmachung des Hinweises auf die Patenterteilung:
10.05.89 Patentblatt 89/19

(84) Benannte Vertragsstaaten:
CH FR GB IT LI SE

(56) Entgegenhaltungen:
FR-A-2 396 869
FR-A-2 410 147
GB-A-282 834
US-A-2 974 659

(73) Patentinhaber: ZOCHE, Michael, Keferstrasse 13,
D-8000 München 40 (DE)

(72) Erfinder: ZOCHE, Michael, Keferstrasse 13, D-8000
München 40 (DE)

(74) Vertreter: Haft, Uwe Michael, Dipl.- Phys.,
Patentanwälte Haft, Berngruber, Czybulka
Postfach 14 02 46, D-8000 München 5 (DE)

LIBER, STOCKHOLM 1989

## Beschreibung

Die Erfindung geht aus von einem Dieselmotor gemäß dem Oberbegriff des Patentanspruches 1. Ein derartiger Dieselmotor ist aus der GB-A-282 834 bekannt. Der dort beschriebene Zweitakt-Dieselmotor wird mit Hilfe eines Druckluftanlassers gestartet und mit einem Abgasturbolader betrieben. Zum Start des Dieselmotors wird aus einer Druckluftquelle in eine Brennkammer Druckluft eingeblasen, wodurch der Kolben und über die Kolbenstange auch die Kurbelwelle bewegt und der Dieselmotor gestartet wird. Die Abluft des Druckluftanlassers wird über eine aus der Brennkammer führende Abluftleitung noch dazu verwendet, eine Hilfsturbine für einen Turbolader zu beaufschlagen, wodurch der Turbolader relativ schnell hochgefahren wird und anschließend den Dieselmotor mit ausreichender Spülluft versorgt. Die Abluft der Hilfsturbine kann noch in die Ansaugleitung des Motors geführt werden, um den Spülluftanteil zu erhöhen.

Diese Einrichtung kann nur bei schweren Motoren, so z. B. Schiffsmotoren angewandt werden, ist jedoch wegen der notwendigen Baugröße nicht für leichte Motoren, wie Flugmotoren geeignet. Zudem muß bei dem bekannten Dieselmotor zunächst eine Brennkammer mit Druckluft gefüllt werden, bevor die Hilfsturbine des Turboladers mit der Druckluft beaufschlagt wird. Die Hilfsturbine wird somit verzögert hochgefahren.

Der Erfindung liegt die Aufgabe zugrunde, einen Dieselmotor, insbesondere einen Flugmotor anzugeben, bei dem der gesamte Dieselmotor mit einem für Flugmotoren geeigneten geringen Gewicht gebaut werden kann und bei dem gleichzeitig der Turbolader mit geringem Aufwand bereits während der Startphase hochgefahren wird.

Diese Aufgabe ist gemäß der Erfindung durch die im kennzeichnenden Teil des Patentanspruches 1 angegebenen Merkmale gelöst.

Demgemäß wird zum Starten des Dieselmotors ein Druckluftanlasser verwendet, dessen Abluft während der Startphase doppelt ausgenutzt wird: Zum einen wird der Motor durch die Druckluft mit ausreichendem Ladedruck bzw. ausreichender Spülluft Versorgt, zum anderen wird gleichzeitig der Turbolader hochgefahren. Mit der Maßnahme gemäß der Erfindung können Dieselmotoren mit geringerem Verdichtungsverhältnis bzw. Kompression konzipiert werden als bisher. Das bisher übliche Verdichtungsverhältnis von ca. 23 : 1 ist im wesentlichen nur für die Startphase notwendig, um hierbei den Dieselmotor ausreichend mit Ladeluft bzw. Spülluft zu versorgen, wohingegen für den normalen Fahrbereich ein wesentlich geringerer Wert von ca. 13 : 1 ausreichend ist.

Druckluftstarter für Dieselmotoren sind zwar an sich bekannt, insbesondere im Zusammenhang mit Schiffsmotoren oder Motoren für Diesellokomotiven, bei denen keine besonderen Rücksichten auf die Baugröße genommen werden muß. Das Prinzip gemäß der Erfindung wird hierbei jedoch nicht ausgenutzt.

Eine Konstruktion gemäß der Erfindung ermögliche es, allein mit Druckluft den Motor anzulassen, mit ausreichender Lade- bzw Spülluft während der Startphase zu versorgen und gleichzeitig den Turbolader hochzufah ren. Einzige Energiequelle hierbei ist z. B. eine kleine Preßluftflasche für den Druckluftstarter.

Mit einer solchen Konstruktion kann ein Zweitaktdieselmotor anlaufen, ohne daß der Turbolader vor dem Start mit einer separaten Energiequelle hochgefahren wird. Ein Viertakt-Dieselmotor läuft mit einer Konstruktion gemäß der Erfindung wesentlich schneller hoch als üblich.

Die sonst bei Druckluftanlassern ohne weitere Verwendung abgeblasene Abluft wird auf die Verdichterseite des Turboladers geführt. Der Turbolader kann hierdurch besonders rasch auf die Betriebsdrehzahl gebracht werden.

Weil die Abluft des Druckluftanlassers der Verdichterseite des Turboladers zugeführt und anschließend in den Motor geleitet wird, ist es möglich, diesem Druckluftstrom einen Zusatzstoff beizumischen, der die Zündwilligkeit des Dieselmotores erhöht. Diese Zumischung erfolgt nur während der Startphase und wird über den Druckluftanlasser bzw. über dessen Abluft gesteuert. Ein derartiges Additiv ist z. B. Kerobrisol, von dem bei jedem Start nur geringe Mengen, z. B. 0,5 cm³, beigemischt werden. Hierdurch wird die Cetanzahl des Dieselkraftstoffes angehoben. Für die gleiche Wirkung wurde bisher der gesamte Dieselkraftstoff mit einem solchen Additiv vermischt.

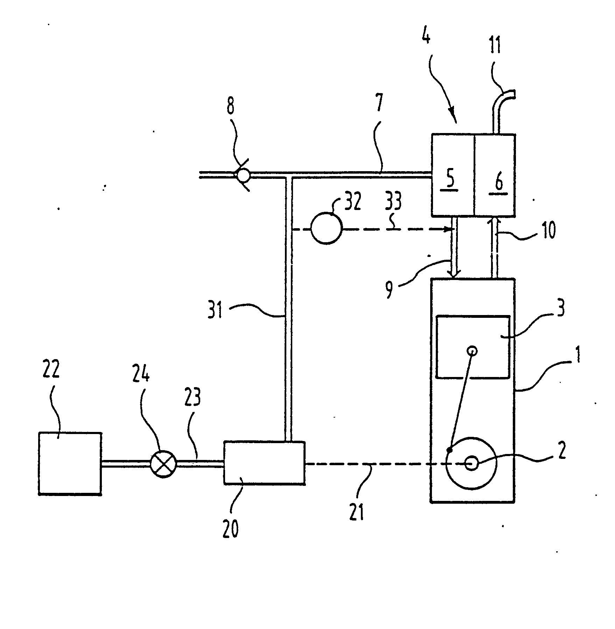

Die Erfindung ist in einem Ausführungsbeispiel anhand der einzigen Figur näher erläutert.

Der Dieselmotor ist in der Figur mit 1, dessen Kurbelwelle mit 2 und ein Zylinder mit 3 bezeichnet. Der Dieselmotor ist z. B. ein Zweitaktsternmotor mit vier Zylindern, der als Flugmotor geeignet ist.

Mit dem Dieselmotor 1 ist ein Abgasturbolader 4 verbunden, der aus einem Verdichter 5 und einer Turbine 6 besteht. Über eine Ansaugleitung 7 und ein Rückschlagventil 8 wird beim normalen Betrieb Luft in den Verdichter 5 angesaugt und von diesem in den Motorraum des Dieselmotors gedrückt. Die in den Motorraum führende Druckleitung ist mit 9 bezeichnet. Die Abgase des Motors 1 werden über eine Abgasleitung 10 in die Turbine 6 des Turboladers 4 geleitet und strömen anschließend durch einen Auspuff 11 ins Freie.

Zum Starten des Dieselmotors 1 ist ein Druckluftanlasser 20 vorgesehen, der über eine mechanische Verbindung 21 direkt auf die Kurbelwelle 2 des Dieselmotors 1 wirkt. Der Druckluftanlasser 20 ist mit einer Druckluftquelle 22 über eine Leitung 23 mit einem Anlasserventil 24 verbunden. Die Abluft des Druckluftanlassers 20 wird über eine Abluftleitung 31 in die Ansaugleitung 7 des Abgasturboladers 4 und von dort direkt in den Verbrennungsraum des Motors 1 geführt.

Des weiteren ist noch ein Reservoir 32 vorgesehen, in dem ein Additiv, z. B. Kerobrisol, enthalten ist. Dieses Additiv wird über hier gestrichelt eingezeichnete Leitungen 33 lediglich während der Startphase dem Motor zur Erhöhung der Zündwilligkeit zugeführt.

## Patentansprüche

1. Dieselmotor (1), insbesondere Flugmotor, mit einem Abgasturbolader (4), der einen verdichter (5) und eine Turbine (6) umfaßt, mit einem Druckluftanlasser (20), der von einer Druckluftquelle (22) versorgt ist, mit einer zum verdichter (5) führenden Ansaugleitung (7) zum Ansaugen von Luft, mit einer Druckleitung (9) zwischen Verdichter (5) und Dieselmotor (1), mit einer Abgasleitung (10) zwischen Dieselmotor (1) und Turbine (6) und mit einer vom Druckluftanlasser (20) wegführenden Abluftleitung (31), dadurch gekennzeichnet, daß der Druckluftanlasser (20) ein mechanisch direkt mit der Kurbelwelle (2) des Dieselmotors (1) verbundenes Bauteil ist, und daß die Abluftleitung (31) mit der Ansaugleitung (7) verbunden ist.

2. Dieselmotor nach Anspruch 1, gekennzeichnet durch eine Einrichtung (32) zur Zuführung eines die Zündwilligkeit des Dieselmotors (1) erhöhenden Stoffes in den Dieselmotor (1) mit Hilfe der Abluft des Druckluftanlassers (20).

## Claims

1. A diesel engine (1), in particular an aircraft engine, having an exhaust gas turbocharger (4) comprising a compressor (5) and a turbine (6), having a compressed air starter (20) supplied by a compressed air source (22) a suction pipe (7) leading to said compressor (5) for taking in air, a pressure pipe (9) between said compressor (5) and said diesel engine (1), an exhaust gas pipe (10) between said diesel engine (1) and said turbine (6), and an exhaust air pipe (31) leading away from said compressed air starter (20), characterized in that said compressed air starter (20) is an element directly connected mechanically to the crank-shaft (2) of said diesel engine (1), and in that said exhaust air pipe (31) is connected to said suction pipe (7).

2. The diesel engine of claim 1 characterized by a means (32) for supplying to said diesel engine (1) with the aid of the exhaust air from said compressed air starter (20) a substance that increases the ignition performance of said diesel engine (1).

## Revendications

1. Moteur diesel (1), notamment moteur d'avion, avec une turbosoufflante à gaz d'échappement (4) qui contient un compresseur (5) et une turbine (6), avec un démarreur à air comprimé (20) qui est alimenté par une source d'air comprimé (22), avec une conduite d'aspiration (7) menant au compresseur (5) pour aspirer l'air, avec une conduite de refoulement (9) entre le compresseur (5) et le moteur diesel (1), avec une conduite d'échappement (10) entre le moteur diesel (1) et la turbine (6) et avec une conduite d'évacuation d'air (31) provenant du démarreur à air comprimé (20), caractérisé en ce que le démarreur à air comprimé (20) est une pièce reliée mécaniquement directement avec l'arbre-manivelle (2) du moteur diesel (1) et que la conduite d'évacuation d'air (31) est reliée avec la conduite d'aspiration (7).

2. Moteur diesel selon la revendication 1, caractérisé par un dispositif (32) d'amenée au moteur diesel (1) d'une substance augmentant la qualité d'allumage du moteur diesel (1) au moyen de l'air d'évacuation du démarreur à air comprimé (20).